# EUROPÄISCHE PATENTANMELDUNG

(11) **EP 0 936 688 A1**
(43) Veröffentlichungstag der Anmeldung: **18.08.1999**
(21) Anmeldenummer: 98810125.9
(22) Anmeldetag: 17.02.1998
(51) Int. Cl.: H01M 8/02

(54) **Interkonnektor für Hochtemperatur-Brennstoffzellen**

(71) Anmelder: Sulzer Hexis AG, 8400 Winterthur (CH)
(72) Erfinder: Batawi, Emad, Dr., 8400 Winterthur (CH)
(74) Vertreter: Sulzer Management AG

(57) **Zusammenfassung**

Der Interkonnektor (1) für Hochtemperatur-Brennstoffzellen ist zwischen einem ersten und einem zweiten planaren elektrochemisch aktiven Element (2, 2'), einem sogenannten PEN, angeordnet. Er trennt dabei einen Brenngas enthaltenden Raum (41) von einem Sauerstoff enthaltenden Raum (51, 53). Ein poröser Sinterkörper (10) des Interkonnektors weist Poren (101) auf, die durch ein Mittel (11') zumindest teilweise versiegelt sind. Durch die Versiegelung ist ein Gasdurchtritt zwischen den genannten Räumen (41, 51) unterbunden.

## Beschreibung

Die Erfindung betrifft einen Interkonnektor für Hochtemperatur-Brennstoffzellen gemäss Oberbegriff von Anspruch 1 sowie eine Brennstoffzellenbatterie.

Die erfindungsgemässen Brennstoffzellen einer Brennstoffzellenbatterie umfassen (siehe EP-A 0 714 147) jeweils einen sogenannten PEN und einen Interkonnektor, der die PEN benachbarter Zellen elektrisch leitend verbindet und gleichzeitig ein Brenngas (insbesondere ein Gemisch von Kohlenmonoxid und Wasserstoff) von einem gasförmigen Sauerstoffträger (insbesondere Luft) trennt. Der PEN hat einen ebenen Dreischichtenaufbau, bestehend nämlich aus einem Feststoffelektrolyten (E), einer positiven Elektrode (P) und einer negativen Elektrode (N). Elektrochemische Reaktionen am PEN mit dem Brennstoff und dem Sauerstoff des Sauerstoffträgers finden bei Temperaturen von rund 900°C statt.

Wegen den hohen Betriebstemperaturen muss für die Interkonnektoren ein Material verwendet werden, dessen thermischer Ausdehnungskoeffizient weitgehend gleich jenem des Feststoffelektrolyten ist. Es ist eine pulvermetallurgisch hergestellte Legierung bekannt, die sich für die Herstellung von Interkonnektoren eignet. Dieses Material, das hauptsächlich aus Chrom besteht (rund 95 Gew.-%) und das durch Sintern bei hohem Druck und hoher Temperatur hergestellt wird, ist teuer. Die Legierung wird in Plattenform hergestellt und muss daher in einer für die Funktion der Interkonnektoren geeigneten Form weiterbearbeitet werden, wobei aufwendige Arbeitsschritte erforderlich sind und Material verloren geht.

Es ist Aufgabe der Erfindung, einen Interkonnektor zu schaffen, der wesentliche Kosteneinsparungen ermöglicht. Diese Aufgabe wird durch den in Anspruch 1 definierten Interkonnektor gelöst.

Der Interkonnektor für Hochtemperatur-Brennstoffzellen ist zwischen einem ersten und einem zweiten planaren elektrochemisch aktiven Element, einem sogenannten PEN, angeordnet. Er trennt dabei einen Brenngas enthaltenden Raum von einem Sauerstoff enthaltenden Raum. Ein poröser Sinterkörper des Interkonnektors weist Poren auf, die durch ein Mittel zumindest teilweise versiegelt sind. Durch die Versiegelung ist ein Gasdurchtritt zwischen den genannten Räumen unterbunden.

Die abhängigen Ansprüche 2 bis 8 beziehen sich auf Weiterbildungen und vorteilhafte Ausführungsformen des erfindungsgemässen Interkonnektors. Gegenstand der Ansprüche 9 und 10 ist eine Brennstoffzellenbatterie mit solchen Interkonnektoren.

Der erfindungsgemässe Interkonnektor umfasst einen Sinterkörper, der eine Vermischung der Reaktanden verhindert und der porös ist, wobei dessen Poren zur Abdichtung mit einem zusätzlichen Mittel gefüllt sind. Die Porosität ermöglicht kostengünstigere Herstellverfahren. Es lassen sich andere Pulvergemische verwenden, beispielsweise solche, die zu einem grossen Teil aus keramischem Material mit einem niedrigen thermischen Ausdehnungskoeffizienten bestehen, und für welche die Herstellung eines dichten, porenfreien Festkörpers nicht möglich wäre. Insbesondere kann auch das Pulvergemisch durch ein Formpressverfahren weitgehend in die Form des Fertigteils gebracht werden.

Chrom ist bei bekannten Interkonnektoren ein wichtiger Bestandteil; denn dieses Metall hat einen niedrigen Wärmeausdehnungskoeffizienten und sein Oxid ist elektrisch leitend. Allerdings findet bei der Betriebstemperatur der Brennstoffzellen ein Stofftransport von sublimiertem Chromoxid über die Gasphase auf die Elektroden statt, wodurch deren Aktivität beeinträchtigt wird. Deswegen ist es erforderlich, die Oberflächen des Interkonnektors mit einem Material zu beschichten, das als Chromoxid-Barriere wirkt (vgl. dazu die EP-A 0 714 147 = P.6651).

Für Deckschichten, die als Chromoxid-Barrieren wirken, kommen keramische Materialien (insbesondere Perowskite) oder Emaile in Frage. Ein Email, beispielsweise mit der Zusammensetzung (in Gewichtsprozenten):
MgO (5-15), Al₂O₃ (15-30), B₂O₃ (10-15), SiO₂ (35-55), MnO (15-30),
   hat einen Erweichungspunkt von rund 1000°C, einen Wärmeausdehnungskoeffizienten, der ungefähr mit jenem des Feststoffelektrolyten übereinstimmt (rund 8 10⁻⁶ K⁻¹ bei 800°C), und die Eigenschaft, eine chromreiche Legierung gut zu benetzen. Dieses Email eignet sich ausser als Chromoxid-Barriere auch als Mittel, mit dem die Poren des Sinterkörpers versiegelt werden können.

Nachfolgend wird die Erfindung anhand der Zeichnungen erläutert. Es zeigen:
- Fig. 1: einen radialen Querschnitt durch einen erfindungsgemässen Interkonnektor einer zentralsymmetrischen Zelle,
- Fig. 2: ausschnittsweise und vergrössert dargestellt, einen Querschnitt durch einen porösen Sinterkörper,
- Fig. 3: eine schematische Darstellung, die Gas- und Luftströmung in einer Brennstoffzelle betreffend,
- Fig. 4: einen erfindungsgemässen Interkonnektor, als Schrägbild dargestellt,
- Fig. 5: einen Querschnitt durch den Interkonnektor der Fig.4, mit den beiden zugeordneten PEN,
- Fig. 6: ein Detail zum Interkonnektor der Fig.4 und
- Fig. 7: eine weitere Ausführungsform des erfindungsgemässen Interkonnektors.

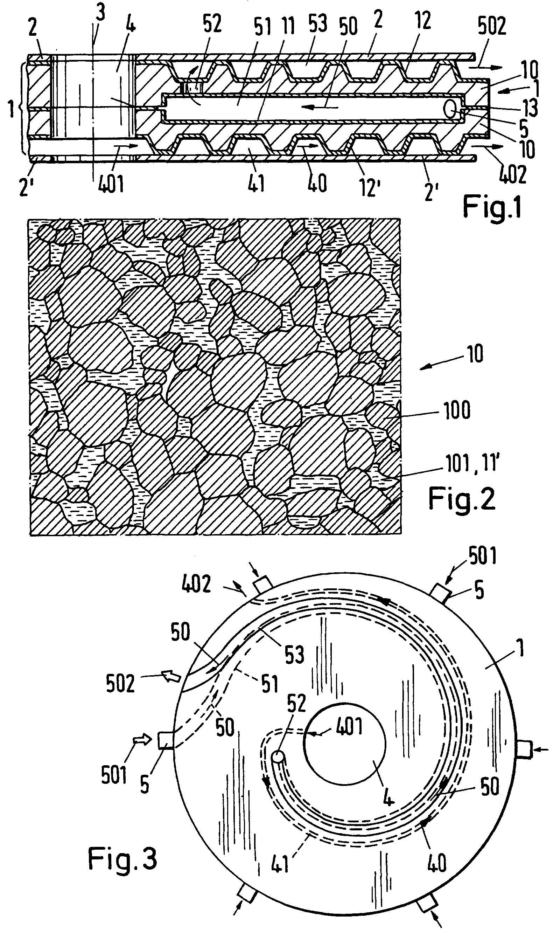

Fig.1 stellt einen Interkonnektor 1 dar, der aus zwei Sinterkörpern 10 Zusammengefügt ist. Die inneren Seiten der Sinterkörper 10 sind mit einem Email behandelt, das durch Verschliessen von Poren eine gasdichte Randzone 11 ausbildet. Das Email verhindert zusätzlich einen Transport von Chromoxid.

Die äusseren Seiten der Sinterkörper 10 weisen Deckschichten 12 bzw. 12' aus einem Perowskit auf, der als Chromoxid-Barriere dient und der elektrisch leitend ist. Die beiden Sinterkörper 10 sind einerseits über elektrisch leitende Lötfolien 13 miteinander und andererseits über die Deckschichten 12, 12' mit einem ersten PEN 2 sowie einem zweiten PEN 2' verbunden, so dass der Interkonnektor 1 eine elektrische Verbindung zwischen den beiden PEN herstellt.

Als Sauerstoffträger wirkende Luft 50 tritt über eine Zuführstelle 5 in einen Hohlraum 51 des Interkonnektors 1 ein, wo sie Wärme aufnimmt. Die vorgewärmte Luft gelangt über eine Austrittsöffnung 52 in einen an den PEN 2 angrenzenden Raum 53. Nach einer Sauerstoffabgabe an den PEN 2 verlässt die Luft die Brennstoffzelle wieder (Pfeil 502).

Die Brennstoffzellen sind im wesentlichen zentralsymmetrisch und in einem Stapel mit einer Achse 3 angeordnet. Brenngas 401 wird über einen axialen Kanal 4 in die Zellen eingespeist. In einem Raum 41 wird das nach aussen strömende Gas 40 über die Oberfläche des PEN 2' verteilt und seine Komponenten auf der Elektrode zur Reaktion gebracht, wobei Wasser und Kohlendioxid als Abgas entsteht. An der Peripherie tritt das Abgas 402 aus der Zelle aus.

Der in Fig.2 gezeigte Körper 10 besteht aus zusammengesinterten Pulverkörnern 100, zwischen denen Poren 101 mit einem Mittel 11' gefüllt sind. Die Pulverkörner 100 bestehen beispielsweise aus Metallen, insbesondere aus Chrom, das zusammen mit einem weiteren Metall, mit Vorteil Eisen, beim Sintern zu einer Legierung fusioniert. Es können im Pulvergemisch weitere Stoffe, beispielsweise keramische, enthalten sein, die beim Formpressen eine günstige Wirkung ausüben. Die Pulverkörner 100 können auch metallisch beschichtete Partikel aus keramischen Stoffen sein.

Die zwischen benachbarten PEN 2, 2' in Kanälen des Interkonnektors 1 strömende Luft 50 bzw. Brenngas 40 werden mit Vorteil in spiral- oder evolventenförmigen Kanälen geführt. Die Strömungsführung in einer Gruppe derartiger Kanäle 41, 51 und 53 ist in Fig.3 schematisch dargestellt. Frische, bereits vorgewärmte Luft 501 wird an der Peripherie des Interkonnektors 1 über ein Eintrittsrohr 5 eingespeist. Nach Durchströmen des Kanals 51 und einem weiteren Aufheizen tritt die Luft 50 in der Mitte durch die Öffnung 52 nach oben und wird von dort über den Kanal 53 zurück zur Peripherie geleitet, wo sie als Abluft 502 die Zelle verlässt. Frisches Brenngas 401 wird aus dem axialen Kanal 4 zentral eingespeist und über den Kanal 51 zur Peripherie geleitet, wo es als Abgas 402 die Zelle verlässt.

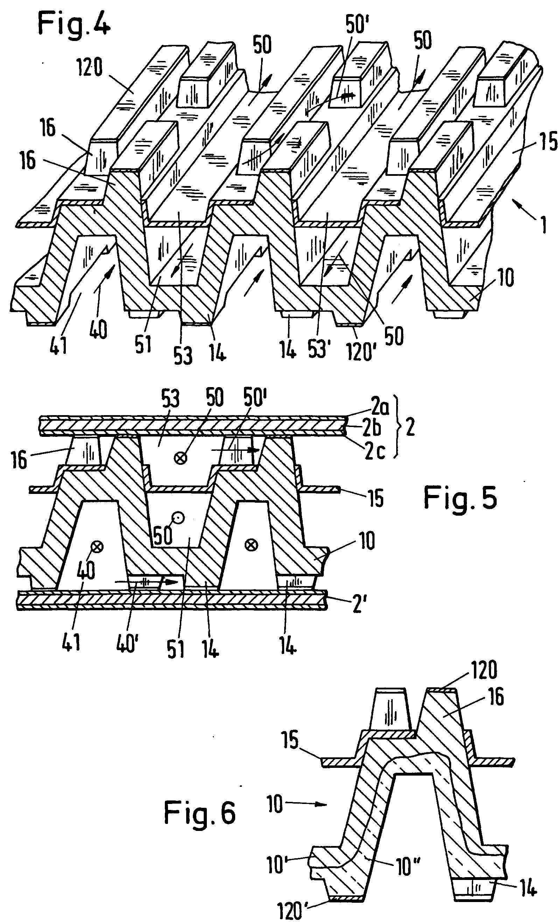

Eine besonders vorteilhafte Ausführungsform des erfindungsgemässen Interkonnektors ist in Fig.4 als Schrägbild und in Fig.5 als Querschnitt gezeigt. Der Sinterkörper 10 stellt eine monolithische Verbindung zwischen elektrisch leitenden Kontaktflächen 120 und 120' der zugeordneten PEN 2, 2' (siehe Fig.5) her. Eine profilierte Folie 15, die geeignet angeordnete Durchbrüche für Kämme 16 des Sinterkörpers 10 aufweist, bildet eine Trennwand zwischen parallelen Kanälen 51 und 53 (vgl. Fig.3). Die Folie 15 muss nicht elektrisch leitend sein; sie kann aus einer chromfreien Legierung bestehen, beispielsweise einer Legierung, die Aluminium und/oder Silizium enthält, und bei der die sich ausbildenden Oxidschichten aus Aluminium- bzw. Siliziumoxid (elektrisch nicht leitend) bestehen. Eine Folie 15 aus einer derartigen Legierung muss nicht mit einer Chromoxid-Barriere beschichtet werden.

In Fig.5 ist der Dreischichtenaufbau des PEN 2 gezeigt: gasseitig eine Anode 2a, luftseitig eine Kathode 2c und dazwischen ein Feststoffelektrolyt 2b, der bei Betriebstemperatur für Sauerstoffionen durchlässig ist.

Die kammartigen Erhebungen 16 lassen Lücken frei, durch die Luft 50' in radialer Richtung von einem Kanal 53 zum benachbarten Kanal 53' fliessen kann. Auf der Gasseite sind ebenfalls kammartige Erhebungen 14 vorgesehen, die eine radiale Strömung 40' des Brenngases 40 ermöglichen.

Die Poren des Sinterkörpers 10 sind zumindest teilweise versiegelt. Mit Vorteil wird die Versiegelung durch ein Email hergestellt, das von der Luftseite her aufgebracht wird (beispielsweise durch Aufsprühen einer wässerigen Suspension von Emailpartikeln, anschliessendem Trocknen und Aufschmelzen des Emails, wobei aufgrund von Kapillarkräften die Schmelze in die Poren eindringt). Wie in Fig.6 gezeigt ist, kann ein luftseitiger Randbereich 10' mit Email versiegelt sein, während die Poren des übrigen Teils 10'' des Sinterkörpers 10 weiterhin offen sind. Das Email auf der Luftseite verhindert auch eine Freisetzung von Chromoxid.

Verglichen mit der Folie 15 ist der Sinterkörper 10 dickwandig ausgebildet. Dadurch ist die thermische Ausdehnung des Interkonnektors praktisch allein durch die Eigenschaften des Sinterkörpers 10 bestimmt. Daher kann die Folie 15 einen Wärmeausdehnungskoeffizienten haben, der sich von jenem des Elektrolyten 2b unterscheidet. In dieser Beziehung besteht eine Ähnlichkeit zu den Interkonnektoren, die aus der EP-A 0 749 171 bekannt sind.

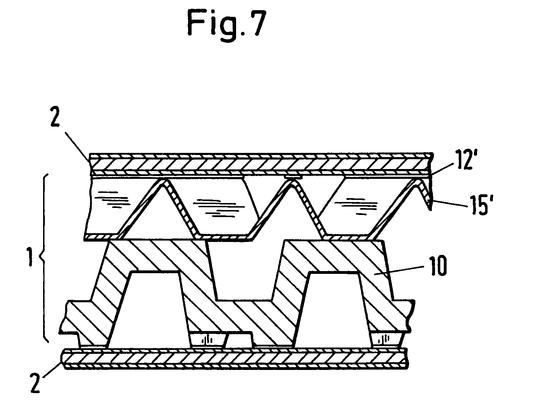

Fig.7 zeigt eine Ausführungsform des erfindungsgemässen Interkonnektors 1, der zweilagig aus einem Sinterkörper 10 und einer profilierten Folie 15' zusammengefügt ist. Ein Beispiel zur Folie 15' ist in der europäischen Anmeldung Nr. 96810723.5 (= P.6766) offenbart. Diese Folie 15' muss im Gegensatz zu der Folie 15 des oben beschriebenen Ausführungsbeispiels elektrisch leitend sein. Daher sind chromhaltige Legierung zu verwenden, was wegen des Chromoxids Deckschichten erforderlich macht.

Der Sinterkörper weist eine Porosität im Bereich zwischen rund 5 und 35% auf. Die Porosität beträgt vorzugsweise rund 20 bis 30 %.

## Patentansprüche

1. Interkonnektor (1) für Hochtemperatur-Brennstoffzellen, der zwischen einem ersten und einem zweiten planaren elektrochemisch aktiven Element (2, 2'), einem sogenannten PEN, angeordnet ist und dabei einen Brenngas enthaltenden Raum (41) von einem Sauerstoff enthaltenden Raum (51, 53) trennt,
gekennzeichnet durch einen porösen Sinterkörper (10), dessen Poren (101) durch ein Mittel (11') zumindest teilweise so versiegelt sind, dass ein Gasdurchtritt zwischen den genannten Räumen (41, 51) unterbunden ist.

2. Interkonnektor nach Anspruch 1, dadurch gekennzeichnet, dass der Sinterkörper (10) aus einem Pulvergemisch (100) hergestellt ist und dass dieses Pulvergemisch bei der Herstellung durch Pressen weitgehend in die Form des Fertigteils gebracht wird.

3. Interkonnektor nach Anspruch 1 oder 2, dadurch gekennzeichnet, dass das porenschliessende Mittel (11') eine amorphe Phase bildet und insbesondere ein Email ist, deren Wärmeausdehnungskoeffizient weitgehend mit jenem des Sinterkörpers (10) übereinstimmt und die als Schmelze den Sinterkörper, insbesondere dessen Porenwände, gut benetzt.

4. Interkonnektor nach einem der Ansprüche 1 bis 3, dadurch gekennzeichnet, dass der Sinterkörper (10) ein Teil eines Wärmetauschers für einen gasförmigen Sauerstoffträger (50) ist, dass zusammen mit einem zweiten Teil (15, 15') mindestens ein Kanal für den Sauerstoffträger zwischen einer Zuführstelle (5) und einer Austrittsöffnung (52) gebildet ist und dass bei der Austrittsöffnung der Sauerstoffträger dem PEN (2) zuführbar ist.

5. Interkonnektor nach einem der Ansprüche 1 bis 4, dadurch gekennzeichnet, dass der Sinterkörper (10) eine monolithische Verbindung zwischen elektrisch leitenden Kontaktflächen (120, 120') der zugeordneten PEN (2, 2') herstellt.

6. Interkonnektor nach einem der Ansprüche 1 bis 5, dadurch gekennzeichnet, dass der Sinterkörper (10) Chrom enthält, dass dessen Oberflächen, die mit Sauerstoff in Kontakt kommen, eine Beschichtung (11, 12) aufweisen, die als Barriere gegen eine Abgabe von Chromoxid in den Sauerstoff enthaltenden Raum (51, 53) wirkt, und dass die Beschichtung zumindest teilweise durch das porenschliessende Mittel (11') gebildet ist.

7. Interkonnektor nach Anspruch 6, dadurch gekennzeichnet, dass Teile der Oberfläche des Sinterkörpers (10), die mit dem PEN in Kontakt stehen, mit einem Material (12, 12') beschichtet sind, das elektrisch leitend ist und das eine Chromoxid-Barriere bildet.

8. Interkonnektor nach einem der Ansprüche 1 bis 7, dadurch gekennzeichnet, dass der Sinterkörper (10) eine Porosität im Bereich zwischen rund 5 und 35 % aufweist, wobei die Porosität vorzugsweise rund 20 bis 30 % beträgt.

9. Brennstoffzellenbatterie, die einen Stapel von Zellen mit Interkonnektoren (1) gemäss einem der Ansprüche 1 bis 7 umfasst, dadurch gekennzeichnet, dass die Zellen weitgehend zentralsymmetrisch sind, dass über einen Verteiler (4) längs der Stapelachse (3) das Brenngas (401) einspeisbar ist und dass an der Stapelperipherie Eintrittsstellen (5) für den Sauerstoffträger (501) sowie Austrittsstellen für das Brenngas (402) und den Sauerstoffträger (502) nach Durchtritt der Zellen angeordnet sind.

10. Brennstoffzellenbatterie gemäss Ansspruch 9, dadurch gekennzeichnet, dass die strukturbildenden Komponenten der Interkonnektoren jeweils aus einem Sinterkörper (10) und einer profilierten Blechfolie (15, 15') zusammengesetzt sind.
